# EUROPEAN PATENT APPLICATION

(11) **EP 4 706 801 A1**
(43) Date of publication of application: **11.03.2026**
(21) Application number: 24800214.9
(22) Date of filing: 29.04.2024
(51) Int. Cl.: B01D 53/14

(54) **ABSORBENT FOR CAPTURING CARBON DIOXIDE**

(30) Priority: 03.05.2023 KR 20230057981; 11.10.2023 KR 20230135049
(71) Applicant: Panasia Co., Ltd., Busan 46744 (KR)
(72) Inventor: KANG, Dongwoan, Busan 46744 (KR); CHOI, Yongki, Busan 46744 (KR); YOOK, Keunjae, Busan 46744 (KR); LEE, Sugyu, Busan 46744 (KR)
(74) Representative: Witte, Weller & Partner Patentanwälte mbB
(86) International application number: PCT/KR2024/005814
(87) International publication number: WO 2024/228530

(57) **Abstract**

The present invention relates to an absorbent for capturing carbon dioxide and, more specifically, to an absorbent for capturing carbon dioxide, comprising: a liquid amine-based compound; a solid amine-based compound; and water, wherein the liquid amine-based compound comprises monoethanolamine and methyldiethanolamine, and the solid amine-based compound is piperazine. The absorbent has an excellent absorption rate and cyclic capacity as a result of the composition ratio having concentrations of piperazine and methyldiethanolamine within a predetermined range, and at the same time, the crystal formation of a fresh absorbent in room-temperature and low-temperature environments is prevented, and the absorbent facilitates gas-liquid exchange in an absorption part and a regeneration part due to the reduced viscosity thereof.

## Description

### Technical Field

The present disclosure relates generally to an absorbent for capturing carbon dioxide. More particularly, the present disclosure relates to an absorbent for capturing carbon dioxide, the absorbent including a liquid amine-based compound, a solid amine-based compound, and water, in which the liquid amine-based compound includes monoethanolamine (MEA) and methyldiethanolamine (MDEA), the solid amine-based compound is piperazine, and the absorbent is formulated such that the concentration ratio of piperazine to MDEA falls within a predetermined range. The absorbent exhibits excellent absorption rate and cyclic capacity, while simultaneously preventing crystallization of a fresh absorbent under ambient and low-temperature conditions and ensuring efficient gas-liquid exchange within an absorption part and a regeneration part due to reduced viscosity thereof.

### Background Art

Flue gases emitted from various industrial sources like thermal power plants contain large amounts of air pollutants, including carbon dioxide, sulfur oxides, nitrogen oxides, and fine dust. Technologies for separating and treating harmful substances in flue gases is becoming increasingly crucial not only from academic and industrial perspectives, but also for the sustainable development of humanity. In particular, reducing atmospheric emissions of carbon dioxide, which is the primary cause of the greenhouse effect, is of critical importance.

In an effort to reduce acidic gases such as carbon dioxide (CO2) in exhaust emissions, various technologies have been developed, including chemical absorption, adhesion, membrane separation, and cryogenic separation. Of these, chemical absorption method that absorbs and captures CO2 using an absorbent solution has been the most widely applied due to its high efficiency and process stability.

To remove acidic gases, a scrubbing process using either an inorganic or organic basic absorbent may be performed. Acidic gases, including CO2, may dissolve into the absorbent, and the CO2-containing absorbent may be regenerated through expansion under low pressure and/or thermal stripping. During this regeneration process, ionic species may recombine to form acidic gases, which may subsequently be removed by steam.

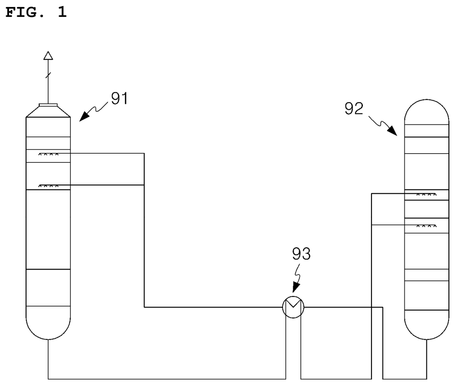

A carbon dioxide capture system in FIG. 1 includes an absorption part 91 that removes CO2 from flue gas by binding it with an absorbent, a heat exchanger 93 that receives the CO2-absorbed absorbent via a pump P and performs heat exchange, and a regeneration part 92 that desorbs chemically bound CO2 from the heat-exchanged absorbent. Accordingly, a carbon dioxide absorption and desorption apparatus performs a CO2 absorption process and an absorbent solution regeneration (desorption) process using the aforementioned components, and the regenerated absorbent solution is recirculated to the absorption part 91.

The reaction between CO2 and the absorbent occurring in the absorption part 91 is an exothermic reaction, which necessitates an additional cooling method in the absorption part to maintain continuous absorption. On the contrary, the desorption of CO2 occurring in the regeneration part is an endothermic reaction, and the energy required for the regeneration of the absorbent to desorb CO2 from the absorbent accounts for a significant portion of the total energy consumption in the entire carbon capture system.

Conventionally, monoethanolamine (MEA) has been used as an absorbent for capturing carbon dioxide, typically in the form of an absorbent solution in which MEA is mixed with water. In the absorption part, MEA reacts with carbon dioxide (CO2) to remove it from the flue gas, and the CO2-absorbed absorbent is regenerated in the regeneration part through heating or similar means. Although traditional amine-based absorbents can recover CO2 with an efficiency of about 75% to 90%, they suffer from the drawback that CO2absorbed in the absorption part is not efficiently desorbed in the regeneration part. The difference in CO2 concentration between a CO2-rich absorbent and a CO2-lean absorbent can be defined as the cyclic capacity. The cyclic capacity, expressed in units of gCO2/kg or mol/L, represents how efficiently the absorbed CO2 can be desorbed in the regeneration part. Conventional absorbents often have a relatively low cyclic capacity, resulting in a degradation in CO2 absorption performance upon reuse after regeneration.

When attempting to absorb CO2 from flue gases emitted by transport means such as ships, substances such as sulfur oxides in the flue gas are primarily absorbed, after which the remaining gas is treated for CO2 absorption. The absorption of substances like sulfur oxides involves using a scrubber. The scrubber operates by using a cooling liquid, such as seawater having a relatively low temperature, as wash water to lower the temperature of the flue gas. When an absorbent is supplied at low temperatures prior to absorbing CO2, the absorbent is prone to crystallization, making normal CO2absorption infeasible. Furthermore, in the absorption part and the regeneration part having structures such as packings for gas-liquid exchange, the efficiency of gas-liquid exchange decreases significantly when the absorbent exhibits high viscosity.

Therefore, there is a need for an absorbent that does not undergo crystallization even at low temperatures during supply and maintains low viscosity to enable efficient gas-liquid exchange in both the absorption part and the regeneration part.

(Patent Document 1) Korean Patent Application Publication No. 10-2013-0002828 (2013.01.08.)

### Disclosure

### Technical Problem

Accordingly, the present disclosure has been made keeping in mind the above problems occurring in the related art, and

an objective of the present disclosure is to provide an absorbent for capturing carbon dioxide, the absorbent including a liquid amine-based compound, a solid amine-based compound, and water, in which the liquid amine-based compound includes methyldiethanolamine (MDEA) and the solid amine-based compound is piperazine, thereby improving the cyclic capacity and absorption rate.

Another objective of the present disclosure is to provide an absorbent for capturing carbon dioxide in which piperazine, the solid amine-based compound, is incorporated at a concentration of 22 wt% to 28 wt% in the absorbent, thereby enabling piperazine to dissolve effectively in the absorbent.

Another objective of the present disclosure is to provide an absorbent for capturing carbon dioxide in which the wt% concentration ratio of methyldiethanolamine (MDEA) to piperazine is adjusted to 1:0.6 to 1, thereby preventing crystallization within the absorbent when it is supplied to an absorption part under low-temperature conditions, and ensuring normal carbon dioxide capture performance.

Another objective of the present disclosure is to provide an absorbent for capturing carbon dioxide in which the wt% concentration ratio of methyldiethanolamine (MDEA) to piperazine is adjusted to 1:0.8, thereby preventing crystallization under low-temperature conditions and maintaining low viscosity.

Another objective of the present disclosure is to provide an absorbent for capturing carbon dioxide in which the liquid amine-based compound further includes monoethanolamine (MEA), and the sum of wt% composition ratios of MEA and methyldiethanolamine (MDEA) in the absorbent is equal to or less than 40 wt%, thereby preventing inefficient increases in regeneration energy.

Another objective of the present disclosure is to provide an absorbent for capturing carbon dioxide in which the viscosity of the absorbent after desorption at 40°C is maintained at equal to or less than 30 cP, thereby facilitating gas-liquid exchange within the absorption part and the regeneration part.

### Technical Solution

The foregoing objectives are implemented by embodiments configured as follows.

According to an embodiment of the present disclosure, an absorbent for capturing carbon dioxide may include: a liquid amine-based compound, a solid amine-based compound, and water, in which the liquid amine-based compound may include methyldiethanolamine (MDEA) and the solid amine-based compound may be piperazine.

According to another embodiment of the present disclosure, piperazine may be incorporated at a concentration of 22 wt% to 28 wt%.

According to another embodiment of the present disclosure, a wt% concentration ratio of methyldiethanolamine (MDEA) to piperazine may be 1:0.6 to 1.

According to another embodiment of the present disclosure, a wt% concentration ratio of methyldiethanolamine (MDEA) to piperazine may be 1:0.8.

According to another embodiment of the present disclosure, the liquid amine-based compound may further include monoethanolamine (MEA), and a sum of wt% composition ratios of MEA and MDEA in the absorbent may be equal to or less than 40 wt%.

According to another embodiment of the present disclosure, a viscosity of the absorbent after desorption at 40°C may be equal to or less than 30 cP.

### Advantageous Effects

The present disclosure can achieve the following effects in accordance with the above-described exemplary embodiments as well as the configuration, the combination, and the use relationship that will be described below.

The present disclosure includes a liquid amine-based compound, a solid amine-based compound, and water, in which the liquid amine-based compound includes methyldiethanolamine (MDEA) and the solid amine-based compound is piperazine, thereby improving the cyclic capacity and absorption rate.

The present disclosure allows piperazine, the solid amine-based compound, to be incorporated at a concentration of 22 wt% to 28 wt% in the absorbent, thereby enabling piperazine to dissolve effectively in the absorbent.

The present disclosure adjusts the wt% concentration ratio of methyldiethanolamine (MDEA) to piperazine to 1:0.6 to 1, thereby preventing crystallization within the absorbent when it is supplied to an absorption part under low-temperature conditions, and ensuring normal carbon dioxide capture performance.

The present disclosure adjusts the wt% concentration ratio of methyldiethanolamine (MDEA) to piperazine to 1:0.8, thereby preventing crystallization under low-temperature conditions and maintaining low viscosity.

The present disclosure further includes monoethanolamine (MEA) as the liquid amine-based compound, and the sum of wt% composition ratios of MEA and methyldiethanolamine (MDEA) in the absorbent is equal to or less than 40 wt%, thereby preventing inefficient increases in regeneration energy.

The present disclosure allows the viscosity of the absorbent after desorption at 40°C to be maintained at equal to or less than 30 cP, thereby facilitating gas-liquid exchange within the absorption part and the regeneration part.

### Description of Drawings

FIG. 1 is a view illustrating a carbon dioxide capture system according to an embodiment of the present disclosure.
FIG. 2 is a block diagram illustrating experimental equipment used to evaluate the performance of an absorbent according to an embodiment of the present disclosure.
FIG. 3 is an actual image illustrating the experimental equipment in FIG. 2.
FIG. 4 is a graph illustrating the absorption and desorption curves of carbon dioxide, showing the absorption rate, minimum absorption capacity, maximum absorption capacity, and cyclic capacity of a carbon dioxide absorbent.

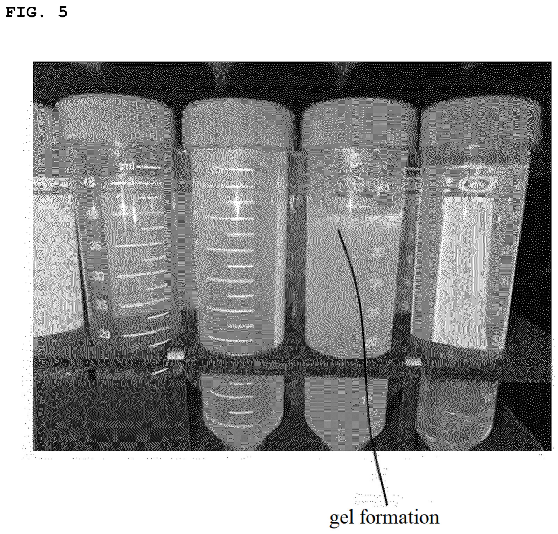

FIG. 5 is an image illustrating an absorbent in which gel has formed at room temperature after a regeneration process is completed.

### Best Mode

Hereinafter, an absorbent for capturing carbon dioxide according to the present disclosure will be described in detail with reference to the accompanying drawings. In the following description of the present disclosure, detailed descriptions of known functions and components incorporated herein will be omitted when it may make the subject matter of the present disclosure unclear. The same reference numerals throughout the drawings denote elements having the same or similar function. In the following description of the present disclosure, detailed descriptions of known functions and components incorporated herein will be omitted when it may make the subject matter of the present disclosure unclear. Unless otherwise defined, all terms including technical and scientific terms used herein have the same meaning as commonly understood by one of ordinary skill in the art to which this disclosure belongs. When terms used herein discord from the commonly understood meaning, the terms will be interpreted as defined herein. Terms such as "first", "second", etc. may be used to distinguish identical or substantially identical elements in a different order, and may be interpreted as being substantially the same as those not labeled as "first", "second", etc.

An absorbent for capturing carbon dioxide according to the present disclosure is an aqueous solution containing liquid and solid amine-based compounds, which is brought into contact with a gas stream such as flue gas to absorb carbon dioxide (CO2) from the gas stream. When a rich absorbent containing CO2from an absorption part 91 is sent to a regeneration part, where the absorbent is regenerated into a lean absorbent by desorbing CO2 through stripping, the absorbent facilitates gas-liquid exchange in both the absorption part and regeneration part due to reduced viscosity thereof. Additionally, during supply to the absorption part under low-temperature conditions, the absorbent is prevented from undergoing crystallization, ensuring normal CO2capture performance. Moreover, CO2 is easily desorbed from the absorbent, resulting in a high cyclic capacity, which allows the absorbent to be regenerated with relatively low regeneration energy.

In this specification, the term "absorption amount (mol/L)" refers to the total quantity of carbon dioxide (CO2) that an absorbent can absorb and hold, expressed, for example, in moles of absorbed CO2 per liter of the absorbent. Additionally, the amount of CO2 that the absorbent holds in its fully loaded state, i.e., a "rich state", is referred to as the "maximum absorption amount", whereas the amount that the absorbent holds in the minimally loaded state, i.e., a "lean state", is referred to as the "minimum absorption amount". The difference between the maximum and minimum absorption amounts is defined as the "cyclic capacity". In other words, the "maximum absorption amount" represents the amount of CO2 that the absorbent holds at the end of an absorption process and before the start of a regeneration process, indicating the state in which it cannot hold any more CO2. On the contrary, the "minimum absorption amount" represents the amount of CO2 remaining in the absorbent without being desorbed after the regeneration process. Therefore, the absorbent from which CO2 has been desorbed begins at the "minimum absorption amount" and absorbs CO2 until it reaches the "maximum absorption amount", with the difference between these values defined as the "cyclic capacity". Additionally, the term "absorption rate (mol/L·s)" refers to the rate at which the absorbent absorbs CO2, indicating the molar concentration of absorbed CO2 per unit of time. In this specification, the term "absorption capacity" encompasses both the "absorption rate" and the "absorption amount". Therefore, an absorbent with excellent "absorption capacity" has a high "absorption rate" and a high "absorption amount", whereas an absorbent with poor "absorption capacity" has at least one of these parameters, "absorption rate" or "absorption amount", being inferior.

The absorbent for capturing carbon dioxide according to the present disclosure may be used in a carbon dioxide capture system having an absorption part 91 and a regeneration part 92. Preferably, in such a carbon dioxide capture system, a rich absorbent that has absorbed carbon dioxide (CO2) through contact between the absorbent and CO2 in the absorption part is transferred to the regeneration part to separate it from CO2 for regeneration, and then the regenerated lean absorbent is recirculated back to the absorption part for reuse in CO2 absorption. The preferred temperature for absorbing CO2 in the absorption part 91 is in the range of about 0°C to about 80°C, more preferably about 20°C to about 60°C. The preferred operating pressure is in the range of 1 atm to 30 atm, more preferably atmospheric pressure to 20 atm. It is well understood by those skilled in the art that the amount of absorbed CO2 increases as the temperature decreases and the pressure increases.

During the CO2 absorption process occurring in the absorption part, the amount of CO2 absorbed may increase with the quantity of the absorbent. However, the initial rate at which CO2is absorbed, i.e., the absorption rate varies depending on the type and composition ratio of the absorbent.

The CO2-absorbed absorbent undergoes regeneration in the regeneration part where carbamates decompose, causing CO2 to be desorbed (i.e., stripped, degassed, or separated) from the absorbent. In one embodiment, the regeneration part may employ a distillation column, which enables efficient regeneration of the absorbent. More specifically, the distillation column may be provided with an internal filling material. Preferably, packing is provided inside the distillation column to maximize the contact area between the gas and liquid phases.

During the CO2 desorption process occurring in the regeneration part, the amount of CO2 desorbed from the absorbent may vary depending on the type and composition ratio of the absorbent. As described above, an absorbent that allows efficient CO2 desorption during the regeneration process exhibits a large cyclic capacity. The preferred temperature for desorbing CO2 in the regeneration part 92 is in the range of about 6°C to about 120°C, more preferably about 80°C to about 110°C. The preferred operating pressure is in the range of 1 atm to 30 atm, more preferably atmospheric pressure to 10 atm.

In general, when CO2 is absorbed in an aqueous absorbent solution containing alkanolamine, the reaction is represented as follows.

Reaction Formula 1 CO2(g) ↔ CO2 (aq) (1) CO2(aq) + 2H2O ↔ HCO3- + H3O+(2) HCO3- + H2O ↔ CO32- + H3O (3) Amine + H2O ↔ Amine H+ + OH-(4) Amine H+ + H2O ↔ Amine + H3O+(5) Amine + CO2(aq) + H2O ↔ Amine COO- + H3O+(6)

Monoethanolamine (MEA) exhibits a fast reaction rate, but is highly corrosive to equipment and requires a large amount of heat for regeneration.

Methyldiethanolamine (MDEA) has a relatively lower heat of reaction compared to MEA, allowing partial reduction of the regeneration energy. However, MDEA is a tertiary alkanolamine in which the three hydrogen atoms of an ammonia molecule (NH3) are replaced by hydrocarbon groups, resulting in a disadvantage of reduced initial CO2 absorption rate in the absorption part.

It is known that primary and secondary amines, such as monoethanolamine (MEA) and diethanolamine (DEA), undergo two types of reactions in aqueous solution: one between CO2 and water, and the other between CO2 and the amine to form a carbamate. Stoichiometrically, one mole of amine can absorb 0.5 moles of CO2. However, tertiary amines, such as triethanolamine (TEA) and methyldiethanolamine (MDEA), undergo only the absorption reactions (1) to (5) in Reaction Formula 1, and do not form carbamates. Instead, tertiary amines like MDEA allow easier CO2 desorption with a lower heat of reaction during regeneration of the absorbent.

First, a liquid amine-based compound refers to an amine compound that exists in a liquid state at room temperature, and various substances known in the art may be used. In one embodiment, the liquid amine-based compound may include monoethanolamine (MEA), methyldiethanolamine (MDEA), or a mixture thereof.

A solid amine-based compound refers to an amine compound that exists in a solid state at room temperature. As a cyclic amine, it exhibits superior CO2 absorption characteristics compared to aliphatic amines and may include substances that maintain a solid state at room temperature. As the solid amine-based compound, piperazine and piperazine derivatives may be used. In one embodiment of the present disclosure, piperazine is employed.

In the absorbent for capturing carbon dioxide according to the embodiment of the present disclosure, monoethanolamine (MEA), methyldiethanolamine (MDEA), and piperazine may be mixed in appropriate concentrations by weight. This prevents crystallization of the absorbent during supply to the absorption part or the regeneration part under low-temperature conditions and reduces the viscosity of the absorbent, thereby enabling efficient gas-liquid exchange within the absorption part and the regeneration part.

Piperazine exhibits high reactivity toward CO2, resulting in a high CO2 absorption capacity and low volatility. However, it has to be dissolved into the absorbent solution in its solid state at room temperature. When dissolving piperazine into the absorbent, it may be dissolved first in methyldiethanolamine (MDEA), the liquid amine-based compound, before forming the absorbent. Depending on the ratio of MDEA to piperazine, crystallization of the absorbent at low temperatures was observed.

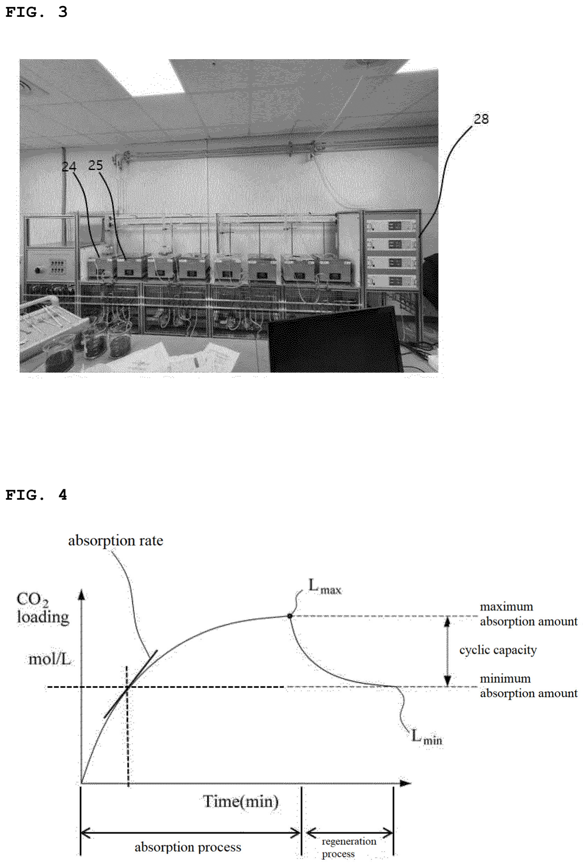

In the absorbent for capturing carbon dioxide according to the embodiment of the present disclosure, piperazine may be incorporated at a concentration of 22wt% to 28wt% in the absorbent, and methyldiethanolamine (MDEA) may be incorporated at a concentration of 14wt% to 30wt% in the absorbent. In one embodiment, the wt% concentration ratio of MDEA to piperazine may range from 1:0.6 to 1. When the amount of methyldiethanolamine (MDEA) is too low relative to the amount of piperazine, the absorbent may crystallize when supplying it under low-temperature conditions. On the other hand, when the amount of MDEA is too high relative to the amount of piperazine, it may be disadvantageous in terms of cyclic capacity and maximum CO2 absorption amount illustrated in FIG.4, while also resulting in excessively increased viscosity.

When the concentration of piperazine in the absorbent is excessively high, piperazine, the solid amine-based compound, may fail to dissolve, or even when it dissolves, it exists as a highly viscous gel. In this case, gas-liquid exchange between the absorbent and a flue gas stream is insufficient, hindering normal CO2 absorption. In one embodiment, the concentration of piperazine in the absorbent may be equal to or less than 30 wt%, preferably equal to or less than 28 wt%.

In one embodiment, the wt% composition ratio (concentration) of methyldiethanolamine (MDEA) may be adjusted in proportionally to the wt% composition ratio (concentration) of piperazine in the absorbent. In one preferred embodiment, the wt% concentration ratio of MEDA to piperazine may range from 1 to 0.8. It was observed that when the concentrations of piperazine and MEDA in the absorbent are 26 wt% and 24 wt%, respectively, favorable effects are exhibited in terms of CO2 absorption rate, cyclic capacity, viscosity, and maximum CO2 absorption amount.

In one embodiment, the sum of wt% composition ratios of monoethanolamine (MEA) and methyldiethanolamine (MDEA) may be equal to or less than 40wt%. In a flue gas stream passing through a carbon dioxide absorption system, the concentration of CO2 may range from 0% to 10%. When the amount of amine compounds in the absorbent exceeds a predetermined level, the amount of CO2 that the absorbent can absorb from the gas stream no longer increases. However, during CO2 desorption, the temperature of the amine compounds needs to be raised, requiring more heat for regeneration of the absorbent. When the sum of composition ratios of MEA and MDEA exceeds 40 wt%, the amount of CO2 absorbed does not increase, while the regeneration energy required for CO2 desorption increases, resulting in an uneconomical disadvantage. When the concentration of MEA is excessively high relative to MDEA, changes in absorption rate and cyclic capacity are minimal, and piperazine may crystallize, leading to uneconomical operation. On the other hand, when the concentration of MEA is excessively low relative to MDEA, a problem arises in that the maximum CO2 absorption amount decreases.

In one embodiment, the viscosity of the absorbent for capturing carbon dioxide after desorption may be equal to or less than 30 cP. The viscosity may be expressed in cP (cPoisson). A high-viscosity absorbent reduces gas-liquid exchange between the absorbent and the gas stream in the absorption part or between the absorbent and the heated gas stream in the regeneration part. In one embodiment of the present disclosure, the viscosity of the absorbent may be measured at a temperature of 40°C and atmospheric pressure after CO2 desorption.

The absorbent for capturing carbon dioxide according to the present disclosure may be formulate to avoid crystallization during its supply under low-temperature conditions. Within the absorption part, the absorbent captures CO2, and after desorption of CO2 in the regeneration part, the absorbent does not crystallize partially. However, the absorbent that has not yet captured CO2, i.e., the fresh absorbent, at least partially crystallizes when supplied to the absorption part under low-temperature conditions. The partial crystallization of the absorbent makes normal CO2 absorption infeasible. The absorbent for capturing carbon dioxide according to the present disclosure does not undergo crystallization preferably when the fresh absorbent is supplied at 20°C or stored at room temperature, and more preferably when the fresh absorbent is supplied at 4°C. The crystallization of the fresh absorbent may be controlled by adjusting the concentration ratio between piperazine and methyldiethanolamine (MDEA), and a primary amine-based compound such as monoethanolamine (MEA) may be added to improve the cyclic capacity and maximum CO2 absorption amount of the absorbent.

### (Example 1)

Under experimental conditions described later, an absorbent was prepared by mixing 6 wt% of monoethanolamine (MEA, Daejung Chemicals), 14 wt% of methyldiethanolamine (MDEA, Acros), and 80 wt% of water to obtain a total of 200 g of absorbent.

### (Example 2)

Under experimental conditions of Example 1, an absorbent was prepared by mixing 6 wt% of MEA, 14 wt% of MDEA, 9 wt% of piperazine (Pz, BASF), and 71 wt% of water to obtain a total of 200 g of absorbent.

### (Example 3)

Under experimental conditions of Example 1, an absorbent was prepared by mixing 6 wt% of MEA, 14 wt% of MDEA, 18 wt% of Pz, and 62 wt% of water to obtain a total of 200 g of absorbent.

### (Example 4)

Under experimental conditions of Example 1, an absorbent was prepared by mixing 6 wt% of MEA, 14 wt% of MDEA, 27 wt% of Pz, and 53 wt% of water to obtain a total of 200 g of absorbent.

### (Example 5)

Under experimental conditions of Example 1, an absorbent was prepared by mixing 6 wt% of MEA, 14 wt% of MDEA, 30 wt% of Pz, and 50 wt% of water to obtain a total of 200 g of absorbent.

### (Example 6)

Under experimental conditions of Example 1, an absorbent was prepared by mixing 6 wt% of MEA, 33 wt% of MDEA, and 61 wt% of water to obtain a total of 200 g of absorbent.

### (Example 7)

Under experimental conditions of Example 1, an absorbent was prepared by mixing 6 wt% of MEA, 33 wt% of MDEA, 9 wt% of Pz, and 52 wt% of water to obtain a total of 200 g of absorbent.

### (Example 8)

Under experimental conditions of Example 1, an absorbent was prepared by mixing 6 wt% of MEA, 33 wt% of MDEA, 18 wt% of Pz, and 43 wt% of water to obtain a total of 200 g of absorbent.

### (Example 9)

Under experimental conditions of Example 1, an absorbent was prepared by mixing 6 wt% of MEA, 33 wt% of MDEA, 27 wt% of Pz, and 34 wt% of water to obtain a total of 200 g of absorbent.

### (Example 10)

Under experimental conditions of Example 1, an absorbent was prepared by mixing 6 wt% of MEA, 33 wt% of MDEA, 30 wt% of Pz, and 31 wt% of water to obtain a total of 200 g of absorbent.

### (Example 11)

Under experimental conditions of Example 1, an absorbent was prepared by mixing 15 wt% of MEA, 24 wt% of MDEA, and 61 wt% of water to obtain a total of 200 g of absorbent.

### (Example 12)

Under experimental conditions of Example 1, an absorbent was prepared by mixing 15 wt% of MEA, 24 wt% of MDEA, 9 wt% of Pz, and 52 wt% of water to obtain a total of 200 g of absorbent.

### (Example 13)

Under experimental conditions of Example 1, an absorbent was prepared by mixing 15 wt% of MEA, 24 wt% of MDEA, 18 wt% of Pz, and 43 wt% of water to obtain a total of 200 g of absorbent.

### (Example 14)

Under experimental conditions of Example 1, an absorbent was prepared by mixing 15 wt% of MEA, 24 wt% of MDEA, 22 wt% of Pz, and 39 wt% of water to obtain a total of 200 g of absorbent.

### (Example 15)

Under experimental conditions of Example 1, an absorbent was prepared by mixing 15 wt% of MEA, 24 wt% of MDEA, 24 wt% of Pz, and 37 wt% of water to obtain a total of 200 g of absorbent.

### (Example 16)

Under experimental conditions of Example 1, an absorbent was prepared by mixing 15 wt% of MEA, 24 wt% of MDEA, 26 wt% of Pz, and 35 wt% of water to obtain a total of 200 g of absorbent.

### (Example 17)

Under experimental conditions of Example 1, an absorbent was prepared by mixing 15 wt% of MEA, 24 wt% of MDEA, 28 wt% of Pz, and 33 wt% of water to obtain a total of 200 g of absorbent.

### (Example 18)

Under experimental conditions of Example 1, an absorbent was prepared by mixing 15 wt% of MEA, 24 wt% of MDEA, 30 wt% of Pz, and 31 wt% of water to obtain a total of 200 g of absorbent.

### (Example 19)

Under experimental conditions of Example 1, an absorbent was prepared by mixing 18 wt% of MEA, 18 wt% of MDEA, and 64 wt% of water to obtain a total of 200 g of absorbent.

### (Example 20)

Under experimental conditions of Example 1, an absorbent was prepared by mixing 18 wt% of MEA, 18 wt% of MDEA, 9 wt% of Pz, and 55 wt% of water to obtain a total of 200 g of absorbent.

### (Example 21)

Under experimental conditions of Example 1, an absorbent was prepared by mixing 18 wt% of MEA, 18 wt% of MDEA, 18 wt% of Pz, and 46 wt% of water to obtain a total of 200 g of absorbent.

### (Example 22)

Under experimental conditions of Example 1, an absorbent was prepared by mixing 18 wt% of MEA, 18 wt% of MDEA, 26 wt% of Pz, and 38 wt% of water to obtain a total of 200 g of absorbent.

### (Example 23)

Under experimental conditions of Example 1, an absorbent was prepared by mixing 18 wt% of MEA, 18 wt% of MDEA, 30 wt% of Pz, and 34 wt% of water to obtain a total of 200 g of absorbent.

### (Example 24)

Under experimental conditions of Example 1, an absorbent was prepared by mixing 18 wt% of MEA, 21 wt% of MDEA, and 61 wt% of water to obtain a total of 200 g of absorbent.

### (Example 25)

Under experimental conditions of Example 1, an absorbent was prepared by mixing 18 wt% of MEA, 21 wt% of MDEA, 9 wt% of Pz, and 52 wt% of water to obtain a total of 200 g of absorbent.

### (Example 26)

Under experimental conditions of Example 1, an absorbent was prepared by mixing 18 wt% of MEA, 21 wt% of MDEA, 18 wt% of Pz, and 43 wt% of water to obtain a total of 200 g of absorbent.

### (Example 27)

Under experimental conditions of Example 1, an absorbent was prepared by mixing 18 wt% of MEA, 21 wt% of MDEA, 26 wt% of Pz, and 35 wt% of water to obtain a total of 200 g of absorbent.

### (Example 28)

Under experimental conditions of Example 1, an absorbent was prepared by mixing 18 wt% of MEA, 21 wt% of MDEA, 30 wt% of Pz, and 31 wt% of water to obtain a total of 200 g of absorbent.

### (Example 29)

Under experimental conditions of Example 1, an absorbent was prepared by mixing 27 wt% of MEA, 12 wt% of MDEA, and 61 wt% of water to obtain a total of 200 g of absorbent.

### (Example 30)

Under experimental conditions of Example 1, an absorbent was prepared by mixing 27 wt% of MEA, 12 wt% of MDEA, 9 wt% of Pz, and 52 wt% of water to obtain a total of 200 g of absorbent.

### (Example 31)

Under experimental conditions of Example 1, an absorbent was prepared by mixing 27 wt% of MEA, 12 wt% of MDEA, 18 wt% of Pz, and 43 wt% of water to obtain a total of 200 g of absorbent.

### (Example 32)

Under experimental conditions of Example 1, an absorbent was prepared by mixing 27 wt% of MEA, 12 wt% of MDEA, 26 wt% of Pz, and 35 wt% of water to obtain a total of 200 g of absorbent.

### (Example 33)

Under experimental conditions of Example 1, an absorbent was prepared by mixing 27 wt% of MEA, 12 wt% of MDEA, 30 wt% of Pz, and 31 wt% of water to obtain a total of 200 g of absorbent.

Comparative Example 1 is an absorbent containing commonly used MEA, while Comparative Examples 2 to 23 are absorbents prepared by mixing MDEA and Pz with water without containing MEA.

### <Comparative Example 1>

Under experimental conditions of Example 1, an absorbent was prepared by mixing 30 wt% of MEA and 70 wt% of water to obtain a total of 200 g of absorbent.

### <Comparative Example 2>

Under experimental conditions of Example 1, an absorbent was prepared by mixing 43 wt% of MDEA, 9 wt% of Pz, and 48 wt% of water to obtain a total of 200 g of absorbent.

### <Comparative Example 3>

Under experimental conditions of Example 1, an absorbent was prepared by mixing 43 wt% of MDEA, 18 wt% of Pz, and 39 wt% of water to obtain a total of 200 g of absorbent.

### <Comparative Example 4>

Under experimental conditions of Example 1, an absorbent was prepared by mixing 43 wt% of MDEA, 26 wt% of Pz, and 31 wt% of water to obtain a total of 200 g of absorbent.

### <Comparative Example 5>

Under experimental conditions of Example 1, an absorbent was prepared by mixing 43 wt% of MDEA, 30 wt% of Pz, and 27 wt% of water to obtain a total of 200 g of absorbent.

### <Comparative Example 6>

Under experimental conditions of Example 1, an absorbent was prepared by mixing 39 wt% of MDEA, 9 wt% of Pz, and 52 wt% of water to obtain a total of 200 g of absorbent.

### <Comparative Example 7>

Under experimental conditions of Example 1, an absorbent was prepared by mixing 39 wt% of MDEA, 18 wt% of Pz, and 43 wt% of water to obtain a total of 200 g of absorbent.

### <Comparative Example 8>

Under experimental conditions of Example 1, an absorbent was prepared by mixing 39 wt% of MDEA, 26 wt% of Pz, and 35 wt% of water to obtain a total of 200 g of absorbent.

### <Comparative Example 9>

Under experimental conditions of Example 1, an absorbent was prepared by mixing 39 wt% of MDEA, 30 wt% of Pz, and 31 wt% of water to obtain a total of 200 g of absorbent.

### <Comparative Example 10>

Under experimental conditions of Example 1, an absorbent was prepared by mixing 39 wt% of MDEA, 34 wt% of Pz, and 27 wt% of water to obtain a total of 200 g of absorbent.

### <Comparative Example 11>

Under experimental conditions of Example 1, an absorbent was prepared by mixing 33 wt% of MDEA, 9 wt% of Pz, and 58 wt% of water to obtain a total of 200 g of absorbent.

### <Comparative Example 12>

Under experimental conditions of Example 1, an absorbent was prepared by mixing 33 wt% of MDEA, 18 wt% of Pz, and 49 wt% of water to obtain a total of 200 g of absorbent.

### <Comparative Example 13>

Under experimental conditions of Example 1, an absorbent was prepared by mixing 33 wt% of MDEA, 26 wt% of Pz, and 41 wt% of water to obtain a total of 200 g of absorbent.

### <Comparative Example 14>

Under experimental conditions of Example 1, an absorbent was prepared by mixing 33 wt% of MDEA, 30 wt% of Pz, and 37 wt% of water to obtain a total of 200 g of absorbent.

### <Comparative Example 15>

Under experimental conditions of Example 1, an absorbent was prepared by mixing 33 wt% of MDEA, 34 wt% of Pz, and 33 wt% of water to obtain a total of 200 g of absorbent.

### <Comparative Example 16>

Under experimental conditions of Example 1, an absorbent was prepared by mixing 27 wt% of MDEA, 9 wt% of Pz, and 64 wt% of water to obtain a total of 200 g of absorbent.

### <Comparative Example 17>

Under experimental conditions of Example 1, an absorbent was prepared by mixing 27 wt% of MDEA, 18 wt% of Pz, and 55 wt% of water to obtain a total of 200 g of absorbent.

### <Comparative Example 18>

Under experimental conditions of Example 1, an absorbent was prepared by mixing 27 wt% of MDEA, 26 wt% of Pz, and 47 wt% of water to obtain a total of 200 g of absorbent.

### <Comparative Example 19>

Under experimental conditions of Example 1, an absorbent was prepared by mixing 27 wt% of MDEA, 30 wt% of Pz, and 43 wt% of water to obtain a total of 200 g of absorbent.

### <Comparative Example 20>

Under experimental conditions of Example 1, an absorbent was prepared by mixing 21 wt% of MDEA, 9 wt% of Pz, and 70 wt% of water to obtain a total of 200 g of absorbent.

### <Comparative Example 21>

Under experimental conditions of Example 1, an absorbent was prepared by mixing 21 wt% of MDEA, 18 wt% of Pz, and 61 wt% of water to obtain a total of 200 g of absorbent.

### <Comparative Example 22>

Under experimental conditions of Example 1, an absorbent was prepared by mixing 21 wt% of MDEA, 26 wt% of Pz, and 53 wt% of water to obtain a total of 200 g of absorbent.

### <Comparative Example 23>

Under experimental conditions of Example 1, an absorbent was prepared by mixing 21 wt% of MDEA, 30 wt% of Pz, and 49 wt% of water to obtain a total of 200 g of absorbent.

### Experiment

### (1) Experimental Equipment

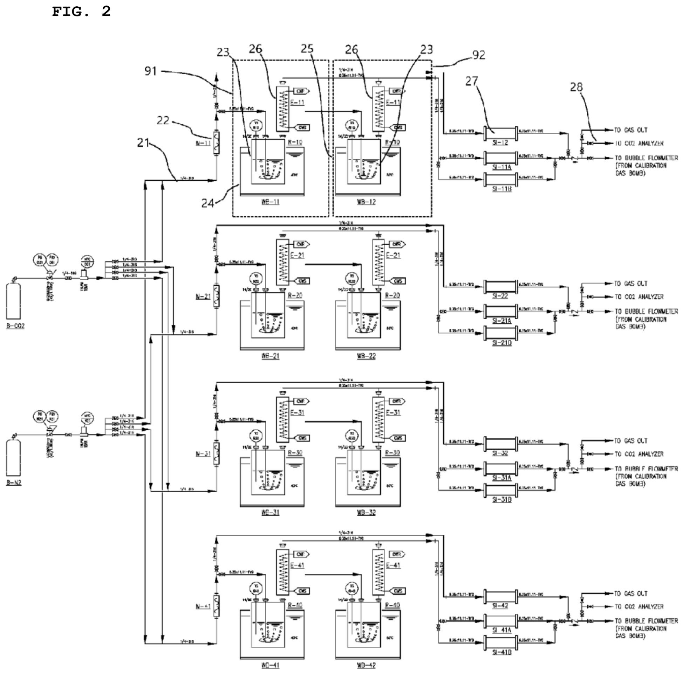

FIG. 2 is a block diagram illustrating experimental equipment used to evaluate the performance of an absorbent, and FIG. 3 is an actual image illustrating the experimental equipment. Referring to FIGS. 2 and 3, the experimental equipment includes a pipe 21 through which a gas composed of carbon dioxide (CO2) and nitrogen (N2) is introduced, a mixer 22 that uniformly mixes the N2 and CO2 gases, an absorption part 91 that absorbs CO2, a regeneration part 92 that desorbs CO2, silica gel 27 that removes moisture contained in the gas, and a CO2 analyzer 28 (Fuji NDIR Gas Analyzer, ZPA) that measures the concentration of CO2 in the gas. The absorption part 91 and the regeneration part 93 each include: a reaction vessel 23 in which an absorbent is contained and into which a gas is introduced, wherein a CO2 absorption reaction and a regeneration process for desorbing CO2 from the absorbent are carried out; a condenser 26 connected to the reaction vessel to cool and return water vapor to the reaction vessel while directing the gas to the CO2 analyzer; a water bath 24 in which the reaction vessel 23 is placed and containing water maintained at 40°C; and a water bath 23 in which the reaction vessel 23 is placed and containing water maintained at 80°C.

In order to obtain experimental results more efficiently, as illustrated in FIG. 3, the applicant prepared a total of four sets, each consisting of a 40°C water bath 24 and an 80°C water bath 25, and installed four CO2 analyzers 28, each dedicated to measuring the CO2 concentration of a gas introduced from a corresponding set. Accordingly, experiments could be conducted simultaneously on four different types of absorbents.

### (2) Evaluation of Reliability of Experimental Equipment

The absorbent in the reaction vessel 23 is in a "lean state" at the beginning of an absorption process. Therefore, as illustrated in FIG. 4, the amount of CO2 absorbed increases rapidly at first but gradually levels off until it reaches the maximum absorption amount, at which point the absorption process is terminated. Since the analyzer measures the concentration of CO2 that exit the absorbent without being absorbed, the readings are initially low and gradually increase over time, eventually converging to a constant value (this is due to the absorbent being in a "lean state" during the initial phase, resulting in a high absorption rate and a low CO2 concentration in the analyzer at the early stage. However, as the absorbent approaches saturation over time, the CO2 concentration measured by the analyzer correspondingly increases). The measurement data from the absorbent is then back-calculated using a predetermined formula to determine the amount of CO2 absorbed by the absorbent over time.

A mixed gas (2,000ml/min) composed of nitrogen (1,700ml/min) and carbon dioxide (300ml/min) was introduced into the reaction vessel 23 placed in the 40°C water bath 24 of the absorption part. The reaction vessel 23 contained 500 mL of a reference solution, which was an aqueous monoethanolamine (MEA) solution (composed of 30wt% of MEA and 70wt% of water). The gas was fed into the absorption part in the reaction vessel, where CO2 in the gas was absorbed by the absorbent. The remaining gas (composed of nitrogen gas and unabsorbed CO2) continuously directed to the CO2 analyzer 28. The concentration of CO2 remaining in the gas was measured by the analyzer at 30-second intervals, and the measurement data was back-calculated using a predetermined formula. After a predetermined period of time, the maximum absorption amount was found to be 0.511mol/L, confirming that the equipment met the reliability evaluation criterion range of 0.5 mol/L to 0.55mol/L.

### (2) Measurement of Absorption Amount

The following experiments were conducted by placing 200g of each absorbent from the aforementioned examples and comparative examples into the reaction vessel.

### 1) Measurement of Absorption Process

Nitrogen gas was supplied to purge the reaction vessel and the pipe of any residual carbon dioxide. Subsequently, a mixed gas (2,000 ml/min) composed of nitrogen (1,900 ml/min) and carbon dioxide (100 ml/min, 5v/v%) was introduced into the reaction vessel 23 placed in the 40°C water bath 24 of the absorption part. The temperature of the water bath 24 housing the reaction vessel 23 was maintained at 40°C to simulate the typical operating temperature of the absorption part. The gas mixture was continuously fed into the reaction vessel 23, where a portion of the CO2 was absorbed by the absorbent. The remaining gas (composed of unabsorbed CO2 and nitrogen gas) exited the absorbent and was directed to the CO2 analyzer 28, which measured the CO2 concentration at 30-second intervals. As described above, since the absorbent is in a "lean state" at the beginning of the absorption process, the CO2 analyzer 28 measures a low CO2 concentration during the initial predetermined period. However, the absorbent's capacity to absorb CO2 decreases over time, resulting in a gradual increase in the CO2 concentration measured by the analyzer. When the absorbent reaches a saturated state where it can no longer absorb any CO2, the absorption process is terminated. In other words, the analyzer continuously measures the CO2 concentration at 30-second intervals. At the saturation point of the absorbent, the concentration of CO2 entering the analyzer is equal to the initial concentration of 100ml/min. Therefore, when the CO2 concentration in the analyzer corresponds to 100ml/min, gas injection is stopped, and the absorption process is terminated. The measurement data obtained over time was back-calculated to determine the total amount of CO2 absorbed up to each measurement time, and the results were plotted as a time-dependent profile (see the "Absorption Process" section in FIG. 4).

### (2) Measurement of Regeneration Process

After the completion of the absorption process, the reaction vessel 23 containing the CO2-absorbed absorbent was transferred to the 80°C water bath 25. Only nitrogen gas was then supplied to the absorbent at a flow rate of 1,900 mL/min to initiate CO2 desorption, while the CO2 concentration in the gas stream entering the analyzer was continuously measured. At the beginning of the desorption process, the absorbent in the reaction vessel 23 is in a "rich" state, meaning it has absorbed the highest concentration of CO2. Consequently, CO2 desorption proceeds efficiently, and the analyzer measures a high CO2 concentration. However, as the desorption progresses over time, the CO2 concentration measured by the analyzer gradually decreases. The applicant terminated the regeneration process when the CO2 concentration measured by the analyzer corresponds to 5 mL/min. The measurement data obtained over time was back-calculated to determine the amount of CO2 remaining in the absorbent (i.e., not yet desorbed) at each measurement time, and the results were plotted as a time-dependent profile (see the "Regeneration Process" section in FIG. 4).

### (3) Measurement of Absorption Rate

As illustrated in FIG. 4, the absorption rate was determined from the slope of the graph at the point corresponding to the minimum CO2 concentration in the absorbent, i.e., the time when no further desorption occurred and the regeneration process had terminated.

### (4) Observation of Gel Formation

The regenerated absorbent was transferred into a separate container and stored at room temperature. The absorbent was then visually inspected to whether crystallization occurred.

### Evaluation of Crystallization and Viscosity

To evaluate the crystallization behavior of absorbents for capturing carbon dioxide with varying concentrations of monoethanolamine (MEA), methyldiethanolamine (MDEA), and piperazine, the absorbents prepared in Examples 1 to 33 were examined for crystallization at room temperature (20°C) and low temperature (4°C) in their fresh state. Additionally, the viscosity of each absorbent after CO2 desorption was measured and compared under ambient pressure at 40°C. Furthermore, the fundamental CO2 absorption performance of the absorbents, including CO2 absorption rate and cyclic capacity, was also evaluated.

**[Table 1]**

| | CO2 absorption rate* 10^5 (mol/L·s) | Cyclic capacity (mol/L) | Crystallization temperature of fresh absorbent (°C) | Viscosity after CO2 desorption (cP) |
|---|---|---|---|---|
| Example 1 | 8.029 | 0.589 | No crystallization | 6.84 |
| Example 2 | 8.379 | 0.872 | No crystallization | 12.33 |
| Example 3 | 10.494 | 1.223 | No crystallization | 23.94 |
| Example 4 | 11.48 | 1.240 | 20 | 31.48 |
| Example 5 | 9.754 | 1.720 | 20 | 32.80 |
| Example 6 | 6.7584 | 0.910 | No crystallization | 10.22 |
| Example 7 | 10.053 | 1.199 | No crystallization | 13.91 |
| Example 8 | 9.067 | 1.525 | 20 | 26.88 |
| Example 9 | 9.949 | 1.674 | 20 | 37.55 |
| Example 10 | 5.513 | 1.660 | 20 | 45.78 |
| Example 11 | 7.925 | 1.026 | No crystallization | 7.11 |
| Example 12 | 8.328 | 1.027 | No crystallization | 11.02 |
| Example 13 | 9.923 | 1.546 | No crystallization | 18.65 |
| Example 14 | 8.834 | 1.365 | No crystallization | 20.84 |
| Example 15 | 9.837 | 1.813 | No crystallization | 22.26 |
| Example 16 | 9.274 | 1.909 | No crystallization | 24.00 |
| Example 17 | 9.328 | 1.875 | No crystallization | 29.31 |
| Example 18 | 9.391 | 1.856 | 4 | 38.6 |
| Example 19 | 8.95 | 0.732 | No crystallization | 6.23 |
| Example 20 | 10.183 | 1.342 | No crystallization | 10.98 |
| Example 21 | 8.807 | 1.164 | No crystallization | 17.57 |
| Example 22 | 9.534 | 1.610 | No crystallization | 31.55 |
| Example 23 | 8.159 | 1.719 | 4 | 37.65 |
| Example 24 | 5.344 | 0.582 | No crystallization | 5.84 |
| Example 25 | 10.818 | 0.977 | No crystallization | 12.55 |
| Example 26 | 8.185 | 1.183 | No crystallization | 18.3 |
| Example 27 | 8.652 | 1.811 | No crystallization | 22.4 |
| Example 28 | 7.77 | 1.755 | 4 | 39.65 |
| Example 29 | 9.339 | 0.829 | No crystallization | 3.45 |
| Example 30 | 9.443 | 1.471 | No crystallization | 9.63 |
| Example 31 | 9.391 | 1.656 | No crystallization | 16.24 |
| Example 32 | 8.431 | 1.800 | No crystallization | 20.10 |
| Example 33 | 5.539 | 1.489 | 4 | 37.16 |

Similarly, for the absorbents prepared in Comparative Examples 1 to 23, crystallization was examined at room temperature (20°C) and low temperature (4°C) in their fresh state. Additionally, the viscosity of each absorbent after CO2 desorption was measured and compared under ambient pressure at 40°C. Furthermore, the fundamental CO2 absorption performance of the absorbents, including CO2 absorption rate and cyclic capacity, was also evaluated.

**[Table 2]**

| | CO2 absorption rate* 10^5 (mol/L·s) | Cyclic capacity (mol/L) | Crystallization temperature of fresh absorbent (°C) | Viscosity after CO2 desorption (cP) |
|---|---|---|---|---|
| Comparative Example 1 | 8.574 | 0.74 | No crystallization | 2.97 |
| Comparative Example 2 | 8.172 | 0.922 | No crystallization | 15.55 |
| Comparative Example 3 | 7.562 | 1.403 | 20 | 19.41 |
| Comparative Example 4 | 9.236 | 1.577 | 20 | 40.2 |
| Comparative Example 5 | 1.219 | 0.469 | 20 | 52.12 |
| Comparative Example 6 | 10.831 | 0.899 | No crystallization | 15.11 |
| Comparative Example 7 | 9.469 | 1.383 | 20 | 18.2 |
| Comparative Example 8 | 8.431 | 1.923 | 20 | 28.45 |
| Comparative Example 9 | 8.094 | 1.835 | 20 | 44.12 |
| Comparative Example 10 | 7.692 | 1.835 | 20 | 59.32 |
| Comparative Example 11 | 10.118 | 0.869 | No crystallization | 11.25 |
| Comparative Example 12 | 9.495 | 1.342 | No crystallization | 14.92 |
| Comparative Example 13 | 9.521 | 1.541 | 4 | 27.87 |
| Comparative Example 14 | 7.419 | 1.508 | 20 | 40.42 |
| Comparative Example 15 | 9.495 | 1.855 | 20 | 45.77 |
| Comparative Example 16 | 8.790 | 0.875 | No crystallization | 10.43 |
| Comparative Example 17 | 8.885 | 0.964 | No crystallization | 17.07 |
| Comparative Example 18 | 9.845 | 1.150 | No crystallization | 25.44 |
| Comparative Example 19 | 10.598 | 1.715 | 20 | 39.97 |
| Comparative Example 20 | 10.701 | 0.65 | No crystallization | 9.35 |
| Comparative Example 21 | 9.845 | 1.149 | No crystallization | 14.41 |
| Comparative Example 22 | 9.806 | 1.320 | No crystallization | 28.36 |
| Comparative Example 23 | 10.39 | 1.561 | 20 | 40.10 |

Referring to Examples 5, 10, 18, 23, 28, and 33, in which the piperazine concentration was 3.5 mol/L, it was confirmed that excessive incorporation of piperazine in the absorbent leads to crystallization in the fresh absorbent under room-temperature (20°C) and low-temperature (4°C) conditions. Crystallization was observed when the piperazine concentration in the absorbent reached about 30 wt%. A similar tendency was also found in the comparative examples, where crystallization occurred in Comparative Examples 5, 9, 10, 14, 15, 19, and 23, all containing piperazine concentrations of equal to or greater than 30 wt%. On the contrary, when the piperazine concentration in the absorbent was lower, the overall cyclic capacity tended to decrease. These results demonstrate that an appropriate piperazine concentration, preferably between 22 wt% and 28 wt%, prevents crystallization of the fresh absorbent while enhancing CO2 absorption performance in terms of both absorption rate and cyclic capacity.

Additionally, from the perspective of the mixing ratio between piperazine and methyldiethanolamine (MDEA), it was found that when MDEA is incorporated in an excess amount relative to piperazine, the viscosity of the absorbent increases, and crystallization tends to occur more readily in the fresh absorbent. Referring to Examples 6 to 10, where the absorbents contained 6 wt% of monoethanolamine (MEA) and 33 wt% of MDEA, the viscosity was found to be 10% to 20% higher than that of the absorbents containing 18 wt% to 24 wt% of MDEA. In particular, under the preferred piperazine concentration of 26 wt%, the absorbent of Example 9 showed a viscosity of 37.55 cP, which is more than 20% higher than that of the other examples with lower MDEA concentrations. These results demonstrate that the increased viscosity adversely affects gas-liquid exchange.

When gas-liquid exchange is hindered, the CO2 absorption capacity tends to decrease accordingly, as can be seen in Table 3 below. Although the maximum CO2 absorption amount (Lmax), as illustrated in FIG. 2, can generally be considered proportional to the concentration of amine compounds in the absorbent, a comparison between Example 9 and Example 16 reveals a difference of more than 20% in Lmax.

**[Table 3]**

| Example | Maximum CO2 absorption amount (mol/L) | | Maximum CO2 absorption amount (mol/L) |
|---|---|---|---|
| Example 1 | 0.968 | Example 19 | 1.726 |
| Example 2 | 1.723 | Example 20 | 2.280 |
| Example 3 | 2.339 | Example 21 | 3.226 |
| Example 4 | 2.715 | Example 22 | 3.836 |
| Example 5 | 3.320 | Example 23 | 4.480 |
| Example 7 | 1.591 | Example 25 | 1.738 |
| Example 8 | 2.569 | Example 26 | 3.281 |
| Example 9 | 2.835 | Example 27 | 3.951 |
| Example 10 | 4.517 | Example 28 | 4.582 |
| Example 11 | 1.645 | Example 29 | 2.359 |
| Example 12 | 2.094 | Example 30 | 2.977 |
| Example 13 | 2.828 | Example 31 | 3.661 |
| Example 14 | 3.042 | Example 32 | 4.153 |
| Example 16 | 3.787 | Example 33 | 4.522 |
| Example 18 | 3.864 | | |

Therefore, in the absorbent for capturing carbon dioxide according to the present disclosure, the concentration of methyldiethanolamine (MDEA) is adjusted relative to piperazine such that the viscosity of the absorbent after CO2 desorption remains at or below 30 cP under 1 atm and 40°C. This ensures efficient gas-liquid exchange between the absorbent and the CO2-containing a flue gas stream within structures that facilitate gas-liquid exchange, such as packings in the absorption or regeneration part.

Meanwhile, as observed in Examples 29 to 33, the absorbents containing 27 wt% of monoethanolamine (MEA) and 12 wt% of methyldiethanolamine (MDEA) exhibited no significant differences in absorption rate and cyclic capacity compared to the absorbents of Examples 11 to 18, which contained 15 wt% of MEA and 24 wt% of MDEA. However, in the fresh absorbents with a piperazine concentration of 30 wt%, crystallization occurred under low-temperature conditions (4°C).

However, when monoethanolamine (MEA), the primary amine-based compound, is incorporated in an excessive amount, it is more prone to oxidation than methyldiethanolamine (MDEA) because the primary amine-based compound exhibits lower chemical stability compared to the tertiary amine-based compound, thereby shortening the lifespan of the absorbent. Additionally, MEA exhibits lower thermal stability than MDEA, the tertiary amine-based compound, at high temperatures, which may lead to a degradation in the performance of the absorbent when the absorption part operates under high-temperature conditions. Therefore, to overcome these drawbacks, the concentration of MEA, the primary amine-based compound, is maintained at a relatively low level, while the concentration of MDEA, the tertiary amine-based compound, is controlled within a predetermined range relative to the concentration of piperazine, the solid amine-based compound. This prevents crystallization of the fresh absorbent and provides a chemically and thermally stable absorbent.

Accordingly, the disclosed absorbent for capturing carbon dioxide exhibits excellent CO2 absorption rate and cyclic capacity, while simultaneously preventing crystallization of the fresh absorbent under room-temperature and low-temperature conditions. Furthermore, the absorbent ensures efficient gas-liquid exchange within the absorption part and the regeneration part due to reduced viscosity thereof, thereby making it highly suitable for use as an absorbent in carbon dioxide capture systems.

The above, detailed description is illustrative of the present disclosure. Additionally, the above-described contents are to explain exemplary embodiments of the present disclosure, and the present disclosure can be used in other various combinations, changes, and environments. That is, the present disclosure may be changed or modified within the scope of the concept of the disclosure disclosed herein, an equivalent scope to the described disclosure, and/or the scope of technology or knowledge in the art. The embodiments are intended to illustrate the best mode for implementing a technical spirit of the present disclosure, and various modifications required in a detailed application field and purpose of the present disclosure are possible. Thus, the above, detailed description of the disclosure is not to be construed as limiting the disclosure to the specific embodiments disclosed. Also, the appended claims should be interpreted to encompass other embodiments.

## Claims

1. An absorbent for capturing carbon dioxide, the absorbent comprising:
a liquid amine-based compound, a solid amine-based compound, and water,
wherein the liquid amine-based compound comprises methyldiethanolamine (MDEA) and the solid amine-based compound is piperazine.

2. The absorbent of claim 1, wherein piperazine is incorporated at a concentration of 22 wt% to 28 wt%.

3. The absorbent of claim 2, wherein a wt% concentration ratio of methyldiethanolamine (MDEA) to piperazine is 1:0.6 to 1.

4. The absorbent of claim 3, wherein a wt% concentration ratio of methyldiethanolamine (MDEA) to piperazine is 1:0.8.

5. The absorbent of claim 4, wherein the liquid amine-based compound further comprises monoethanolamine (MEA), and a sum of wt% composition ratios of MEA and MDEA in the absorbent is equal to or less than 40 wt%.

6. The absorbent of claim 5, wherein a viscosity of the absorbent after desorption at 40°C is equal to or less than 30 cP.
